# FASCICULE DE BREVET EUROPEEN

(11) **EP 3 022 038 B1**
(45) Date de publication et mention de la délivrance du brevet: **11.05.2022**
(21) Numéro de dépôt: 14741311.6
(22) Date de dépôt: 18.07.2014
(51) Int. Cl.: B29C 48/505, B29C 48/515, B29C 48/585, B29B 7/58, B29C 48/25, B29B 7/42

(54) **DISPOSITIF ET PROCÉDÉ D'EXTRUSION DE MÉLANGES D'ÉLASTOMÈRES**
VORRICHTUNG UND VERFAHREN ZUM EXTRUDIEREN VON ELASTOMERMISCHUNGEN
DEVICE AND METHOD FOR EXTRUDING ELASTOMER MIXTURES

(30) Priorité: 18.07.2013 FR 1357081
(43) Date de publication de la demande: 25.05.2016
(73) Titulaire: Compagnie Générale des Etablissements Michelin, 63000 Clermont-Ferrand (FR)
(72) Inventeur: LETOCART, Arnaud, F-63040 Clermont-Ferrand Cedex 9 (FR); OUGIER, Christophe, F-63040 Clermont-Ferrand Cedex 9 (FR); CROSNIER, Gérard, F-63040 Clermont-Ferrand Cedex 9 (FR)
(74) Mandataire: Redouté, Gilles Pierre
(86) Numéro de dépôt international: PCT/EP2014/065561
(87) Numéro de publication internationale: WO 2015/007906

(56) Documents cités:
- WO-A1-2008/004313
- GB-A- 894 127
- JP-U- H03 124 806
- US-A- 2 224 212
- US-A- 3 191 229
- US-A- 3 780 995

## Description

La présente invention se rapporte aux dispositifs et procédés d'extrusion de matières plastiques, notamment de mélanges d'élastomères destinés à être utilisés pour la fabrication de pneumatiques.

Ces dispositifs d'extrusion comportent généralement une vis d'extrusion placée dans un fourreau dont le but est de propulser et de mettre en pression les mélanges à extruder, la forme finale du produit extrudé étant donnée par une filière de sortie. La vis a également pour fonction d'homogénéiser le mélange et en particulier de permettre une bonne uniformité des caractéristiques thermiques, rhéologiques et chimiques au sein du volume de mélange, de manière à pouvoir assurer leur constance au niveau de la filière de sortie.

On connaît différents moyens prévus pour améliorer l'homogénéité du mélange dans un dispositif d'extrusion (ou extrudeuse) et qui sont disposés en amont de la filière de sortie du dispositif. Parmi ces moyens, on connaît, tel que décrit dans le document DE3805849, ceux faisant appel à des doigts homogénéisateurs agencés sur la périphérie du fourreau de l'extrudeuse dont les extrémités sont protubérantes à l'intérieur de la chambre d'extrusion et permettent d'assurer un meilleur cisaillement du mélange.

On a souhaité ensuite adapter les performances des extrudeuses aux différents mélanges utilisés avec une vis et un fourreau donnés. Ainsi, une solution a été un montage réglable des doigts homogénéisateurs. Ces solutions sont décrites par exemple dans les documents FR 2193685 ou FR 2582251. Ainsi, en modifiant la position des doigts dans la chambre d'extrusion en fonction du type de mélange qui se trouve dans celle-ci on arrive à obtenir une meilleure qualité du mélange, mais au prix d'une mise en oeuvre coûteuse et longue lorsque l'on additionne les temps de réglage de tous les doigts. Par ailleurs, on connaît dans l'état de la technique des solutions qui proposent le réglage de tous les doigts simultanément, mais elles sont complexes et posent des problèmes d'étanchéité entre les doigts et la chambre d'extrusion.

D'autres solutions connues dans l'état de la technique font appel à l'utilisation de grilles ou filtres montés en sortie de l'extrudeuse, juste avant la filière de sortie du produit extrudé. Les documents US 3756574 et EP 0381171 décrivent de tels dispositifs qui améliorent l'homogénéité du mélange et filtrent les impuretés. Ces grilles ou filtres montés avant la filière de sortie ont comme inconvénients la rétention du mélange dans les orifices de passage de mélange et la difficulté de nettoyage de ces orifices.

On connaît par ailleurs le document FR 2636560 qui décrit un dispositif de modification en continu du fonctionnement d'une machine d'extrusion à l'aide des moyens qui réalisent un déplacement axial de la vis par rapport au fourreau de la machine. Un tel dispositif rend la construction de la machine complexe et peu fiable.

On connaît également du document US 3 191 229, une machine pour mélanger en continu des matières plastiques ou du caoutchouc comportant une bague conique permettant, lors de son déplacement axial, de régler l'entrefer en sortie de la machine. Un tel réglage est toutefois sensible au positionnement axial de la vis.

Le document GB 894 127 décrit une extrudeuse pour tubes en matière plastique comportant une zone d'homogénéisation définie entre un anneau homogénéisateur et l'extrémité aval de la vis. Toutefois, l'anneau est solidaire de la buse tubulaire d'extrusion et est conçu pour une dimension donnée et un matériau spécifique du tube extrudé.

Par ailleurs, les machines ou dispositifs d'extrusion comportent généralement une vis d'extrusion de forme tubulaire permettant son refroidissement lorsque l'intérieur de la vis est mis en communication avec un circuit hydraulique de refroidissement. Pour ceci, l'extrémité avant de la vis est obturée par un bouchon de fermeture du circuit et l'extrémité amont de la vis est munie de moyens de connexion au circuit hydraulique de refroidissement de la machine. Dans ce type de machines, le démontage et le remplacement de la vis impliquent la déconnexion et la vidange du circuit hydraulique de refroidissement.

Tel est le cas dans le document US 2 224 212 qui décrit une presse à briquettes fabriquées à partir de sciure ou de copeaux de bois et comportant une tête de formage amovible. Le démontage de la tête suppose d'avoir vidangé le circuit de refroidissement afin d'éviter les fuites.

Un objectif de l'invention est de remédier aux inconvénients des documents précités et de permettre d'améliorer significativement l'homogénéité d'un mélange d'élastomère avant la sortie d'une extrudeuse en adaptant facilement les caractéristiques de celle-ci au mélange à extruder sans perturber le fonctionnement du circuit hydraulique de refroidissement de l'extrudeuse.

Cet objectif est atteint par l'invention qui propose un dispositif d'extrusion de mélanges d'élastomères selon la revendication 1 et un procédé de réglage de l'entrefer d'un dispositif d'extrusion de mélanges d'élastomères selon la revendication 13.

L'agencement d'une telle bague de travail de manière démontable ou interchangeable à l'aide des moyens de fixation rapide à l'extrémité de sortie du mélange de l'extrudeuse, la bague pouvant être montée sur la vis et/ou à l'intérieur du fourreau de l'extrudeuse, permet de changer facilement et rapidement de bague de travail en fonction de la composition et des propriétés physico-chimiques du mélange d'élastomères. Par directement amovible, on comprend que la bague est montée de manière interchangeable à la sortie de l'extrudeuse immédiatement après le passage au fin, ce qui veut dire que la bague devient directement accessible en vue de son montage et démontage rapide à l'extrémité de sortie de l'extrudeuse, la plupart des extrudeuses étant accessibles au niveau de cette extrémité de sortie en basculant en position ouverte les éléments de mise en forme de celle-ci (par exemple la voûte ou le nez à rouleau). Par moyens de fixation rapide on comprend des moyens de fixation amovible permettant le montage et le démontage de la bague de travail uniquement, sans démontage puis remontage des autres parties de fixation intermédiaire de celle-ci ou des parties de la vis de l'extrudeuse, plus particulièrement sans démonter le bouchon de vidage du circuit hydraulique de refroidissement de la vis d'extrusion qui ferme le circuit à l'extrémité aval de la vis. Ceci permet de garder le circuit hydraulique en état de fonctionnement lorsque l'on échange de bague de travail.

L'agencement directement amovible et rapidement interchangeable de la bague de travail de l'invention au voisinage de l'extrémité aval de la vis permet de diminuer la dimension initiale de l'entrefer, et de réaliser ainsi un réglage rapide de l'entrefer, ce qui a pour effet d'appliquer une contrainte de cisaillement supplémentaire au mélange d'élastomères juste avant l'orifice de sortie du fourreau. Cette contrainte de cisaillement est adaptée ainsi au mélange d'élastomères présent dans l'extrudeuse afin d'assurer une meilleure homogénéité de celui-ci à la sortie de l'extrudeuse. De surcroît, l'agencement d'une telle bague en sortie d'extrudeuse produit une perte de charge qui fait diminuer le débit par tour de vis et permet d'augmenter ainsi le travail apporté au mélange.

De surcroît, la bague de travail de l'invention est montée sur la vis et/ou sur le fourreau de l'extrudeuse, ce qui permet d'obtenir un cisaillement supplémentaire entre une première surface mobile en rotation et une deuxième qui est fixe. Ceci permet d'assurer l'évacuation du mélange lors de la rotation de la vis et supprime tout problème de nettoyage rencontré avec les filtres ou plaques perforées de l'état de la technique qui étaient montées fixes à la sortie de l'extrudeuse.

De préférence, la bague de travail permet une variation de l'entrefer comprise entre 0,5 et 5% de la valeur du diamètre nominal de l'extrudeuse.

Lors des tests effectués en laboratoire avec différents mélanges d'élastomères, il a été constaté qu'en adaptant la variation de l'entrefer en fonction du diamètre nominal de l'extrudeuse on arrive à imposer au mélange suffisamment de contraintes dans l'entrefer pour obtenir une bonne homogénéité en sortie d'extrudeuse.

Selon un premier mode de réalisation de l'invention, la bague de travail est montée sur un bouchon de fermeture dudit circuit hydraulique qui forme l'extrémité aval de la vis.

Selon un deuxième mode de réalisation de l'invention, la bague est montée à l'intérieur du fourreau.

Dans une variante de réalisation de l'invention, la surface de la bague de travail définissant ledit entrefer est lisse. Il a été constaté lors des tests effectués en laboratoire que, pour des valeurs préétablies de l'entrefer mesuré entre la surface lisse de la bague de travail et la surface en vis-à-vis du fourreau ou de la vis de l'extrudeuse, on obtient un travail de cisaillement supplémentaire même pour une surface lisse.

Dans une variante de réalisation de l'invention, la surface de la bague de travail définissant ledit entrefer est crénelée. Il a été constaté lors des tests effectués en laboratoire, que les créneaux ainsi réalisés assurent un meilleur mouvement du mélange à l'arrière de chaque créneau tel que vu dans le sens de rotation de la vis, l'entrefer permettant ce travail étant défini entre la base du créneau et la surface en vis-à-vis du fourreau ou de la vis de l'extrudeuse.

De préférence, la bague de travail comporte des créneaux inclinés rectilignes ou en hélice.

Dans une réalisation avantageuse, les créneaux inclinés ou en hélice forment un angle inférieur à 45° avec la direction axiale de la vis. Ceci confère plus de cisaillement au mélange que lorsque les créneaux sont droits.

Dans une autre réalisation avantageuse de l'invention, les créneaux inclinés ou en hélice forment un angle compris entre 45° et 80° avec la direction axiale de la vis. Ceci permet, de plus, d'aider à évacuer le mélange et à vider l'extrudeuse.

De préférence encore, après agencement de ladite bague de travail l'entrefer diminue jusqu'à une valeur comprise entre 0,3 et 5 mm.

De préférence, la bague de travail a une forme générale cylindrique ayant un diamètre supérieur à sa largeur. On préfère une bague de travail cylindrique, car elle ne pose pas de problème de changement de forme ou dimensions de l'entrefer par dilatation lors du travail du mélange.

Avantageusement, la largeur utile de la bague de travail est inférieure ou égale au diamètre de la vis d'extrusion.

Il a ainsi été constaté, lors des tests effectués au laboratoire que largeur utile (ou de cisaillement) de la bague de travail est directement proportionnelle avec la perte de charge et le temps de cisaillement subis par le mélange dans l'extrudeuse. Ainsi, pour des diamètres de vis d'extrudeuse compris entre 110 et 150 mm, la largeur utile de la bague de travail est de préférence choisie dans la plage comprise entre 2 et 30 mm. Pour des diamètres de vis supérieurs à 150 mm, la largeur utile de la vis peut augmenter jusqu'à ce qu'elle soit égale au diamètre de la vis d'extrusion (275 mm).

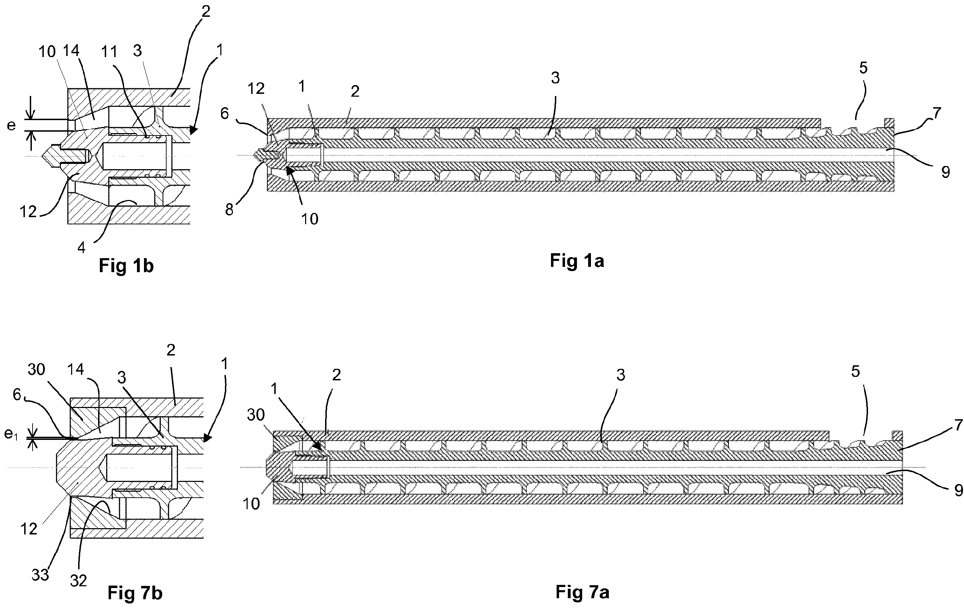

L'invention sera mieux comprise grâce à la suite de la description, qui s'appuie sur les figures suivantes :
- la figure la est une vue en coupe longitudinale montrant un ensemble vis et fourreau d'un dispositif d'extrusion de l'état de la technique et la figure 1b est une vue à échelle agrandie d'un détail de la partie droite de la figure la,
- la figure 2a est une vue en coupe longitudinale montrant un ensemble vis et fourreau d'un dispositif d'extrusion selon un premier mode de réalisation de l'invention et la figure 2b est une vue à échelle agrandie d'un détail de la partie droite de la figure 2a,
- la figure 3 est une vue en perspective d'un dispositif d'extrusion réalisé selon une variante du premier mode de réalisation, le fourreau étant en partie coupé pour mieux laisser apparaitre la vis,
- la figure 4 est une vue en perspective de la bague de travail de la figure 3,
- la figure 5 est une vue en perspective du support de la bague de travail de la figure 4,
- la figure 6a est une vue de face d'un dispositif d'extrusion réalisé selon une deuxième variante du premier mode de réalisation, la figure 6b est une vue en coupe axiale du dispositif de la figure 6a, et les figures 6c et 6d représentent une vue de côté et une vue en perspective de la bague de travail de la figure 6a,
- la figure 7a est une vue en coupe longitudinale montrant un ensemble vis et fourreau d'un dispositif d'extrusion selon un deuxième mode de réalisation de l'invention et la figure 7b est une vue à échelle agrandie d'un détail de la partie droite de la figure 6a.

Sur les différentes figures, les éléments identiques ou similaires portent la même référence. Leur description n'est donc pas systématiquement reprise.

A la figure la, on a représenté par une vue en coupe longitudinale, un ensemble vis et fourreau faisant partie d'un dispositif d'extrusion ou extrudeuse selon l'état de la technique. L'extrudeuse comprend une vis 1 entraînée en rotation autour de son axe longitudinal à l'intérieur d'une enveloppe cylindrique allongée formant un fourreau 2. La vis 1 est munie de filets hélicoïdaux 3 dont le pas et l'inclinaison sont définis en fonction du type de travail que doit fournir l'extrudeuse. Les filets hélicoïdaux 3 coopèrent avec la paroi interne 4 du fourreau 2 pour réaliser le travail d'homogénéisation et permettre la progression du mélange entre une ouverture d'introduction 5 de la matière et une ouverture de sortie 6 du mélange du fourreau 2. L'ouverture d'introduction 5 de la matière est située proche de l'extrémité amont 7 de la vis 1 et l'ouverture de sortie 6 du mélange est située proche de l'extrémité aval 8 de la vis 1, tel que vu par rapport au sens de déplacement de la matière à l'intérieur du fourreau 2. L'extrémité aval 8 de la vis 1 débouche dans une voûte de forme générale conique qui reçoit le mélange avant son passage à travers une filière de sortie (non représentées sur les dessins). La voûte est réalisée au sein d'un support monté démontable à l'ouverture de sortie 6 du mélange (non représenté sur les dessins), par exemple en étant mobile en pivotement autour d'un axe perpendiculaire à l'axe longitudinal de la vis 1. Un tel support de voûte permet, après démontage, d'accéder rapidement à l'ouverture de sortie 6 du fourreau 2 et à l'extrémité aval 8 de la vis 1 de l'extrudeuse.

La vis 1 a une forme générale tubulaire, elle comporte un conduit 9 à l'intérieur duquel circule un liquide de refroidissement de la vis en provenance d'un circuit hydraulique de l'extrudeuse (non représenté sur les dessins). Le conduit 9 est fermé à l'extrémité aval 8 par un bouchon 10 fileté muni de joints d'étanchéité 11 et, à l'extrémité amont 7, il est raccordé au circuit hydraulique. La pointe 12 du bouchon 10 constitue l'extrémité aval 8 de la vis 1 et forme avec la paroi interne 4 du fourreau 2 un passage 14 convergent. Les dimensions de l'extrémité aval du passage 14 sont données par la différence entre le diamètre interne de l'orifice de sortie 6 du fourreau 2 et le diamètre externe de la pointe 12 mesurée au niveau de l'orifice de sortie 6, cette différence définissant un entrefer « e » annulaire de passage du mélange.

Selon l'invention, on agence une bague de travail 20, 30 au voisinage de l'extrémité aval de la vis 1 de manière à modifier la dimension initiale de l'entrefer « e » à une valeur « e₁ » et adapter ainsi les caractéristiques de l'extrudeuse à la composition et aux propriétés physico-chimiques du mélange.

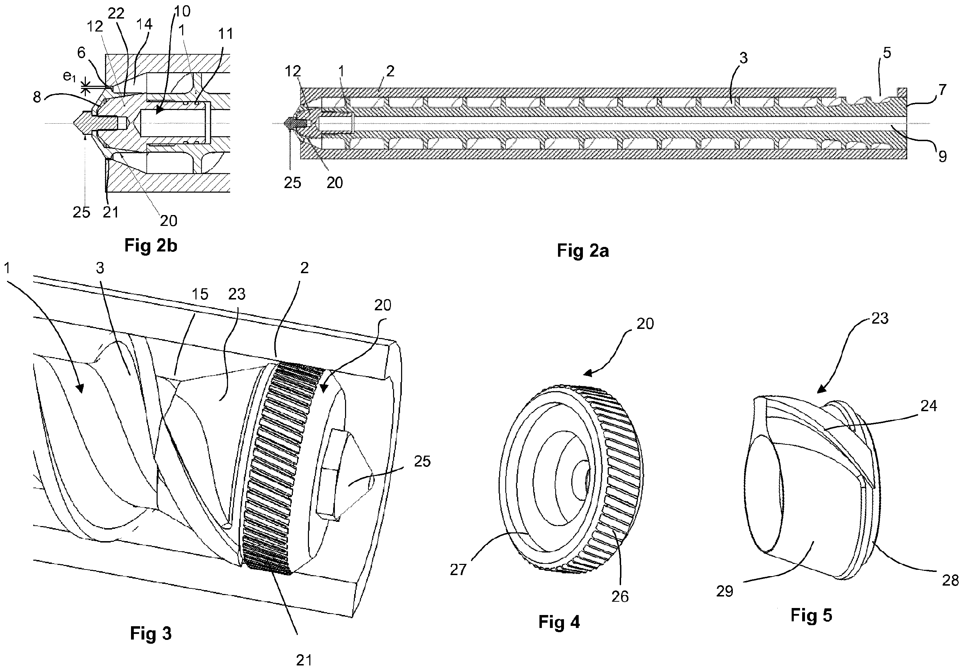

Les figures 2a et 2b illustrent un premier mode de réalisation de l'invention où l'on remarque une bague de travail 20 qui est montée à l'extrémité aval 8 de la vis 1 constituée par la pointe 12 du bouchon 10. La bague 20 a une forme générale cylindrique, sa surface interne est réalisée de manière à pouvoir s'adapter à celle externe de la pointe 12 du bouchon 10 sur lequel elle est fixée moyennant une vis 25. La bague 20 présente une collerette 21 de plus grand diamètre qui définit avec le diamètre de l'orifice de sortie 6 du fourreau 2 un entrefer « e₁ ». La collerette 21 correspond à la largeur utile de la bague, elles se prolonge par une jupe 22 comportant une surface intérieure d'assemblage de forme conique venant coopérer avec la surface extérieure de forme conique de l'extrémité aval 8 de la vis 1, en l'occurrence celle de la pointe 12 du bouchon 10 pour assurer le centrage et positionnement axial de la bague par rapport à la vis de l'extrudeuse, un serrage rapide à l'aide de la vis 25 assurant le maintien en position de la bague. Dans une variante, la bague 20 s'arrête au niveau de la collerette 21, elle ne comporte plus de jupe 22, ce qui permet de faciliter son extraction en vue de son remplacement par une autre bague de travail sans vider l'extrudeuse.

Dans une réalisation avantageuse, les filetages de la vis 25 et du bouchon 10 ont des hélices en sens contraires afin de prévenir une ouverture intempestive du bouchon lors du démontage de la bague de travail.

En fonctionnement, lorsque la vis 1 est entraînée en rotation, la matière qui arrive dans l'extrudeuse via l'orifice d'introduction 5 est travaillée lors de son passage vers l'orifice de sortie 6 et transformée en un mélange assez homogène. Avant de sortir du fourreau, le mélange est travaillé par la bague 20, il subit un cisaillement supplémentaire lors de son passage via l'entrefer « e₁ », cisaillement qui s'effectue entre la paroi fixe du fourreau 2 et celle mobile de la bague de travail 20, ce qui produit une perte de charge faisant diminuer le débit par tour de vis et permet d'augmenter ainsi le travail apporté au mélange. On obtient ainsi un mélange plus homogène en sortie, car la valeur du diamètre externe de la bague de travail 20 et donc le travail fourni par celle-ci, est choisi de manière à l'adapter à la composition et au type de mélange présent dans l'extrudeuse, tout en permettant au mélange d'être complètement évacué car l'une des parois qui effectue le cisaillement est mobile (à la différence d'un filtre ou d'une plaque fixe à orifices de passage montée en sortie, dans quel cas le mélange obture les orifices et trous de passage).

Un travail expérimental de définition de la valeur de l'entrefer « e₁ » est effectué au préalable en fonction de la composition et des propriétés physico-chimiques des différents mélanges qui seront travaillés avec une extrudeuse donnée. Ce travail de caractérisation permet de définir un jeu de des bagues de différents diamètres et ayant différentes géométries de leur surface de travail à utiliser avec l'extrudeuse en fonction du mélange utilisé.

La figure 3 illustre une variante du premier mode de réalisation du dispositif de l'invention qui comporte une bague de travail 20 qui est montée sur la vis 1 moyennant un support 23 de forme générale conique (mieux visible à la figure 5). Plus particulièrement, la bague de travail 20 comporte un épaulement interne 27 venant s'emboîter sur l'épaulement externe 28 du support 23, l'ensemble étant rendu solidaire du bouchon 10 par une vis 25. Le support 23 comporte un filet 24 réalisé sur la surface extérieure conique 29 du support 23 qui est agencé sur le bouchon 10 et a des spires plus rapprochées que celles des filets 3 de la vis 1. Le support 23 permet ainsi de faire avancer le mélange via un passage 15 divergent jusqu'à la périphérie de la bague de travail 20. La bague de travail 20 (mieux visible à la figure 4) comporte des créneaux 26 dont le diamètre de sommet présente un faible jeu avec la paroi interne du fourreau 2 (le jeu juste suffisant pour que la bague puisse tourner à l'intérieur du fourreau), et dont le diamètre de base définit, lui, l'entrefer « e₁ » avec la paroi interne du fourreau 2, mesuré au niveau de l'orifice de sortie 6. La hauteur des créneaux est définie en fonction de la composition du mélange de manière à ce que celui-ci puisse être mieux travaillé entre la paroi interne du fourreau et le fond des créneaux. En effet, il a été établi lors des tests effectués en laboratoire que des tourbillons de mélange se formaient derrière chaque créneau, ce qui permet d'obtenir une meilleure homogénéité du mélange en sortie d'extrudeuse. Les créneaux 26 sont de préférence inclinés. Ainsi, lors des tests effectués en laboratoire, il a été établi que lorsque l'angle fait par la tangente à la direction longitudinale des créneaux 26 et la direction axiale de la vis 1 (on comprend avec une droite parallèle à l'axe longitudinal de la vis) est inférieur à 45° les créneaux 26 assurent un complément de travail de cisaillement et donc une meilleure homogénéité du mélange compris, alors que lorsque cet angle est compris entre 45° et 80°, les créneaux 26 participent à l'opération de vidage de l'extrudeuse. Dans une variante, les créneaux 26 peuvent être droits (on comprend agencés parallèlement à la direction axiale de la vis).

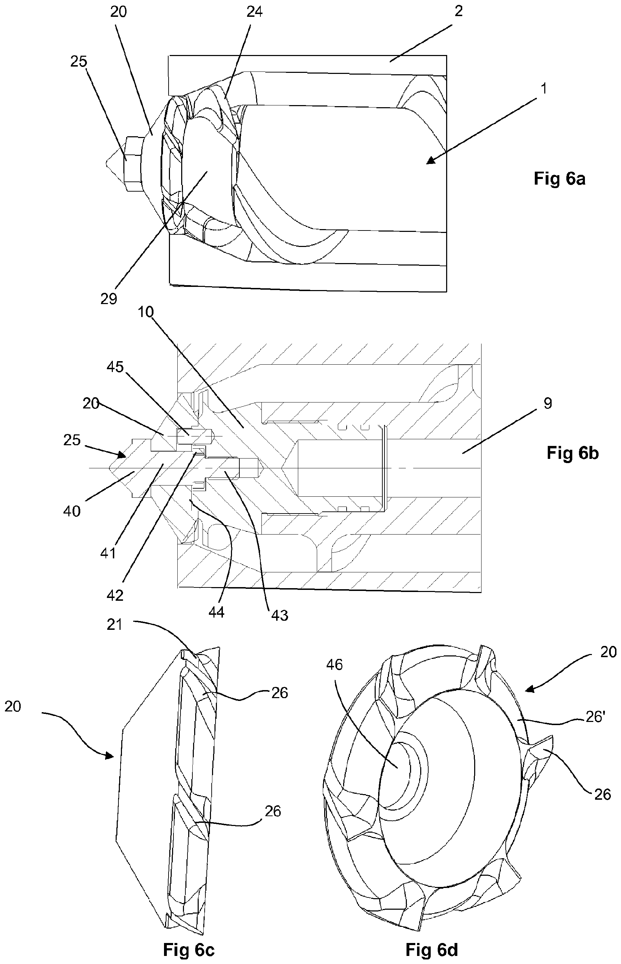

Les figures 6a à 6d illustrent une deuxième variante du premier mode de réalisation du dispositif de l'invention. Dans cette variante, le bouchon 10 est réalisé de manière à présenter une surface extérieure similaire à celle du support 23 du dispositif de la figure 3, plus particulièrement une surface extérieure conique 29 munie de filets hélicoïdaux 24 dont les hélices ont un pas inférieur aux hélices des filets 3 de la vis 1. La bague de travail 20 des figures 6a à 6d présente des créneaux 26 en forme d'hélice pratiqués sur la largeur de la collerette 21. L'entrefer « e₁ » est défini par la différence entre le diamètre interne de la paroi interne du fourreau 2 et celui externe de la base 26' des créneaux 26. L'angle fait par la direction de l'hélice des créneaux 26 avec la direction axiale de la bague est choisi en fonction de l'effet souhaité, notamment pour des valeurs inférieures à 45° on obtient un renforcement du travail de cisaillement fourni par la bague de travail 20, et pour des valeurs comprises entre 45° et 80°, les créneaux 26 aident à évacuer le mélange de l'extrudeuse, en plus du travail de cisaillement fourni. Avantageusement, la vis 25 est réalisée de manière à pouvoir extraire la bague de travail 20 en fin de course de dévissage. Ainsi, la vis 25 comprend une tête de vis 40 à l'extrémité d'une tige filetée dont le tronçon de tête 41 est réalisé de manière à pouvoir traverser avec jeu l'orifice central 46 de la bague 20 et le tronçon d'extrémité 43 est réalisé de manière à pouvoir être vissé dans un orifice prévu à cet effet dans le bouchon 10. Une rondelle filetée 42 est agencée entre le tronçon de tête 41 et celui d'extrémité 43 et vient en butée contre l'extrémité latérale 44 de la bague de travail 20 lors du dévissage de la vis 25 et permet d'extraire la bague de travail 25 en même temps que la vis 25. Un tenon 45 fixé dans la partie frontale du bouchon 10 coopère avec un orifice prévu dans la bague de travail 20 et empêche la rotation de celle-ci.

Les figures 7a et 7b illustrent un deuxième mode de réalisation de l'invention où l'on remarque une bague de travail 30 qui est montée à l'extrémité aval du fourreau 2. La surface extérieure 31 de la bague de travail 30 a une forme générale cylindrique, la bague est insérée dans un orifice de forme correspondante pratiqué à l'extrémité du fourreau 1 et elle est fixée moyennant des vis de fixation en périphérie (par exemple en prévoyant des brides ou un flasque de fixation, non représentés sur les dessins). La surface intérieure de la bague de travail 30 comporte un tronçon de forme conique 32 qui forme avec la vis 1 un passage 14 convergent et se termine par un tronçon cylindrique 33 qui définit avec le diamètre externe de la pointe 12 du bouchon 10 l'entrefer « e₁ ». Comme dans le cas précédent, le tronçon cylindrique 33 peut être muni de créneaux inclinés rectilignes ou en hélice, l'entrefer « e₁ » étant dans ce cas défini de manière similaire à celui de la bague 20.

La bague de travail 20, 30 est de préférence réalisée en un même matériau que la vis d'extrusion 1.

Dans une variante, non représentée aux dessins, on envisage le montage combiné d'une bague de travail amovible 20 sur la vis 1 et d'une bague de travail amovible 30 sur le fourreau 2, ce qui permet d'augmenter la plage des valeurs de l'entrefer « e₁ ».

Il est également prévu selon l'invention d'adapter la bague de travail 20, 30 au mélange d'élastomères utilisé en agissant à la fois sur la valeur de l'entrefer « e₁ » et sur celle de la largeur utile de la bague de travail. Pour ceci, pour un diamètre donné, et donc pour un entrefer prédéterminé, on prévoit un jeu de bagues de différentes largeurs.

D'autres variantes et modes de réalisation de l'invention peuvent être envisagés sans sortir du cadre de ses revendications. Ainsi, on pourrait utiliser une bague de travail amovible à diamètre variable, par exemple une bague fendue associée à un mécanisme de commande apte à varier son diamètre.

## Revendications

1. Dispositif d'extrusion de mélanges d'élastomères comportant une vis (1) rotative à filets (3) hélicoïdaux agencée dans un fourreau (2) fixe, l'extrémité amont (7) de la vis étant apte à être couplée à des moyens d'entraînement en rotation et l'extrémité aval (8) de celle-ci étant apte à propulser un mélange vers une filière de sortie, la vis ayant une forme tubulaire pour permettre la circulation d'un fluide en provenance d'un circuit hydraulique de refroidissement, le diamètre externe de l'extrémité aval (8) de la vis (1) définissant avec le diamètre interne de l'orifice de sortie (6) du fourreau (2) un entrefer annulaire pour le passage du mélange, ledit dispositif comprenant une bague de travail (20,30) montée directement amovible à l'aide des moyens de fixation rapide au voisinage de ladite extrémité aval (8) de manière à modifier l'entrefer annulaire en diminuant sa dimension initiale en fonction de la composition du mélange utilisé et à appliquer une contrainte de cisaillement au mélange dans ledit entrefer, ledit dispositif étant **caractérisé en ce que** la vis (1) comporte un conduit (9) à l'intérieur duquel circule un liquide de refroidissement en provenance du circuit hydraulique de refroidissement, et qui est fermé, à l'extrémité aval (8) de ladite vis, par un bouchon (10), et **en ce que** les moyens de fixation rapide permettent de démonter et monter la bague de travail (20, 30) sans démonter le bouchon de fermeture du circuit hydraulique.

2. Dispositif selon la revendication 1, **caractérisé en ce que** la bague de travail (20, 30) permet une variation de l'entrefer comprise entre 0,5 et 5% de la valeur du diamètre nominal de l'extrudeuse.

3. Dispositif selon l'une des revendications 1 ou 2, **caractérisé en ce que** la bague de travail (20) est montée sur un bouchon de fermeture dudit circuit hydraulique qui forme l'extrémité aval (8) de la vis (1).

4. Dispositif selon l'une des revendications 1 à 3, **caractérisé en ce que** la bague (30) est montée à l'intérieur du fourreau (2).

5. Dispositif selon l'une des revendications précédentes, **caractérisé en ce que** la surface de la bague de travail (20,30) définissant ledit entrefer est lisse.

6. Dispositif selon l'une des revendications 1 à 4, **caractérisé en ce que** la surface de la bague de travail (20,30) définissant ledit entrefer est crénelée.

7. Dispositif selon la revendication 6, **caractérisé en ce que** la bague de travail (20,30) comporte des créneaux (26) inclinés rectilignes ou en hélice.

8. Dispositif selon la revendication 7, **caractérisé en ce que** les créneaux (26) inclinés ou en hélice forment un angle inférieur à 45° avec la direction axiale de la vis (1).

9. Dispositif selon la revendication 7, **caractérisé en ce que** les créneaux (26) inclinés ou en hélice forment un angle compris entre 45° et 80° avec la direction axiale de la vis (1).

10. Dispositif selon l'une des revendications précédentes, **caractérisé en ce que**, après agencement de ladite bague de travail (20,30) l'entrefer diminue jusqu'à une valeur comprise entre 0,3 mm et 5 mm.

11. Dispositif selon l'une des revendications précédentes, **caractérisé en ce que** la bague de travail (20,30) a une forme générale cylindrique ayant un diamètre supérieur à sa largeur.

12. Dispositif selon l'une des revendications précédentes, **caractérisé en ce que** la largeur utile de la bague de travail est inférieure ou égale au diamètre de la vis d'extrusion.

13. Procédé de réglage de l'entrefer d'un dispositif d'extrusion de mélanges d'élastomères comportant une vis (1) rotative à filets (3) hélicoïdaux agencée dans un fourreau (2) fixe, l'extrémité amont (7) de la vis étant apte à être couplée à des moyens d'entraînement en rotation et l'extrémité aval (8) de celle-ci étant apte à propulser un mélange vers une filière de sortie, la vis ayant une forme tubulaire pour permettre la circulation d'un fluide en provenance d'un circuit hydraulique de refroidissement, le diamètre externe de l'extrémité aval (8) de la vis (1) définissant avec le diamètre interne de l'orifice de sortie (6) du fourreau (2) un entrefer annulaire pour le passage du mélange, et le dispositif comprenant une bague de travail (20,30) montée directement amovible à l'aide des moyens de fixation rapide au voisinage de ladite extrémité aval (8) de manière à modifier l'entrefer annulaire en diminuant sa dimension initiale en fonction de la composition du mélange utilisé et à appliquer une contrainte de cisaillement au mélange dans ledit entrefer, ledit procédé étant **caractérisé en ce que** la vis (1) comporte un conduit (9) à l'intérieur duquel circule un liquide de refroidissement en provenance du circuit hydraulique de refroidissement, et qui est fermé, à l'extrémité aval (8) de ladite vis, par un bouchon (10), **en ce que** les moyens de fixation rapide permettent de démonter et monter la bague de travail (20, 30) sans démonter le bouchon de fermeture du circuit hydraulique, **en ce que** l'on prévoit un jeu de bagues de travail (20, 30) interchangeables, et **en ce que** l'on utilise les moyens de fixation rapide pour changer de bague de travail (20, 30) afin de régler l'entrefer annulaire en fonction du mélange d'élastomères à extruder.

## Patentansprüche

1. Vorrichtung zum Extrudieren von Elastomermischungen mit einer drehenden Schnecke (1) mit schraubenförmigen Gewinden (3), die in einem feststehenden Zylinder (2) angeordnet ist, wobei das stromaufwärtige Ende (7) der Schnecke geeignet ist, mit Drehantriebsmitteln gekoppelt zu werden, und ihr stromabwärtiges Ende (8) geeignet ist, eine Mischung zu einer Auslassdüse zu treiben, wobei die Schnecke eine Röhrenform hat, um die Zirkulation eines von einem hydraulischen Kühlkreis kommenden Fluids zu ermöglichen, wobei der Außendurchmesser des stromabwärtigen Endes (8) der Schnecke (1) mit dem Innendurchmesser der Auslassöffnung (6) des Zylinders (2) einen ringförmigen Spalt zum Durchtreten der Mischung bildet, wobei die Vorrichtung einen Arbeitsring (20, 30) umfasst, der direkt lösbar mithilfe der Schnellbefestigungsmittel in der Nähe des stromabwärtigen Endes (8) montiert ist, so dass der ringförmige Spalt verändert wird, indem sein Ausgangsmaß in Abhängigkeit von der Zusammensetzung der verwendeten Mischung verringert wird, und eine Scherbeanspruchung auf die Mischung in dem Spalt angewandt wird, wobei die Vorrichtung **dadurch gekennzeichnet ist, dass** die Schnecke (1) einen Kanal (9) beinhaltet, in dessen Inneren eine vom hydraulischen Kühlkreis kommende Kühlflüssigkeit zirkuliert und der am stromabwärtigen Ende (8) der Schnecke mit einem Stopfen (10) verschlossen wird, und dadurch, dass die Schnellbefestigungsmittel es ermöglichen, den Arbeitsring (20, 30) zu demontieren und zu montieren, ohne den Verschlussstopfen des hydraulischen Kreises zu demontieren.

2. Vorrichtung nach Anspruch 1, **dadurch gekennzeichnet, dass** der Arbeitsring (20, 30) eine Änderung des Spalts zwischen 0,5 und 5 % des Werts des Nenndurchmessers des Extruders ermöglicht.

3. Vorrichtung nach einem der Ansprüche 1 oder 2, **dadurch gekennzeichnet, dass** der Arbeitsring (20) an einem Verschlussstopfen des Hydraulikkreises montiert ist, der das stromabwärtige Ende (8) der Schnecke (1) bildet.

4. Vorrichtung nach einem der Ansprüche 1 bis 3, **dadurch gekennzeichnet, dass** der Ring (30) im Inneren des Zylinders (2) montiert ist.

5. Vorrichtung nach einem der vorhergehenden Ansprüche, **dadurch gekennzeichnet, dass** die Fläche des Arbeitsrings (20, 30), der den Spalt bildet, glatt ist.

6. Vorrichtung nach einem der Ansprüche 1 bis 4, **dadurch gekennzeichnet, dass** die Fläche des Arbeitsrings (20, 30), der den Spalt bildet, gerippt ist.

7. Vorrichtung nach Anspruch 6, **dadurch gekennzeichnet, dass** der Arbeitsring (20, 30) schräge geradlinige oder schraubenförmige Rippen (26) beinhaltet.

8. Vorrichtung nach Anspruch 7, **dadurch gekennzeichnet, dass** die schrägen oder schraubenförmigen Rippen (26) einen Winkel von weniger als 45° mit der axialen Richtung der Schnecke (1) bilden.

9. Vorrichtung nach Anspruch 7, **dadurch gekennzeichnet, dass** die schrägen oder schraubenförmigen Rippen (26) einen Winkel zwischen 45° und 80° mit der axialen Richtung der Schnecke (1) bilden.

10. Vorrichtung nach einem der vorhergehenden Ansprüche, **dadurch gekennzeichnet, dass**, nach dem Einrichten des Arbeitsrings (20, 30), der Spalt bis zu einem Wert zwischen 0,3 mm und 5 mm abnimmt.

11. Vorrichtung nach einem der vorhergehenden Ansprüche, **dadurch gekennzeichnet, dass** der Arbeitsring (20, 30) eine zylindrische Grundform hat, deren Durchmesser größer als ihre Breite ist.

12. Vorrichtung nach einem der vorhergehenden Ansprüche, **dadurch gekennzeichnet, dass** die Nutzbreite des Arbeitsrings kleiner oder gleich dem Durchmesser der Extrusionsschnecke ist.

13. Verfahren zum Einstellen des Spalts einer Vorrichtung zum Extrudieren von Elastomermischungen mit einer drehenden Schnecke (1) mit schraubenförmigen Gewinden (3), die in einem feststehenden Zylinder (2) angeordnet ist, wobei das stromaufwärtige Ende (7) der Schnecke geeignet ist, mit Drehantriebsmitteln gekoppelt zu werden, und ihr stromabwärtiges Ende (8) geeignet ist, eine Mischung zu einer Auslassdüse zu treiben, wobei die Schnecke eine Röhrenform hat, um die Zirkulation eines von einem hydraulischen Kühlkreis kommenden Fluids zu ermöglichen, wobei der Außendurchmesser des stromabwärtigen Endes (8) der Schnecke (1) mit dem Innendurchmesser der Auslassöffnung (6) des Zylinders (2) einen ringförmigen Spalt zum Durchtreten der Mischung bildet, und die Vorrichtung einen Arbeitsring (20, 30) umfasst, der direkt lösbar mithilfe der Schnellbefestigungsmittel in der Nähe des stromabwärtigen Endes (8) montiert ist, so dass der ringförmige Spalt verändert wird, indem sein Ausgangsmaß in Abhängigkeit von der Zusammensetzung der verwendeten Mischung verringert wird, und eine Scherbeanspruchung auf die Mischung in dem Spalt angewandt wird, wobei das Verfahren **dadurch gekennzeichnet ist, dass** die Schnecke (1) einen Kanal (9) beinhaltet, in dessen Inneren eine vom hydraulischen Kühlkreis kommende Kühlflüssigkeit zirkuliert und der am stromabwärtigen Ende (8) der Schnecke mit einem Stopfen (10) verschlossen wird, dadurch, dass die Schnellbefestigungsmittel es ermöglichen, den Arbeitsring (20, 30) zu demontieren und zu montieren, ohne den Verschlussstopfen des hydraulischen Kreises zu demontieren, dadurch, dass man einen Satz austauschbare Arbeitsringe (20, 30) vorsieht, und dadurch, dass man die Schnellbefestigungsmittel verwendet, um den Arbeitsring (20, 30) zu wechseln, um den ringförmigen Spalt in Abhängigkeit von der zu extrudierenden Elastomermischung einzustellen.

## Claims

1. Device for extruding mixtures of elastomers comprising a rotary screw (1) with helical flights (3) which is arranged in a fixed barrel (2), the upstream end (7) of the screw being able to be coupled to rotational-drive means and the downstream end (8) thereof being able to propel a mixture towards an exit die, the screw having a tubular shape to allow a fluid from a hydraulic cooling circuit to flow, the outside diameter of the downstream end (8) of the screw (1) defining, with the inside diameter of the exit orifice (6) of the barrel (2), an annular gap for the passage of the mixture, the said device comprising a working ring (20, 30) mounted directly removably with the aid of quick-fit means near the said downstream end (8) so as to modify the annular gap by reducing its initial size according to the composition of the mixture used and to apply a shear stress to the mixture in the said gap, the said device being **characterized in that** the screw (1) comprises a duct (9) in which a coolant from the hydraulic cooling circuit flows, and which is closed, at the downstream end (8) of the said screw, by a plug (10), and **in that** the quick-fit means allow the working ring (20, 30) to be fitted and removed without removing the hydraulic circuit closure plug.

2. Device according to Claim 1, **characterized in that** the working ring (20, 30) allows a gap variation between 0.5 and 5% of the nominal diameter value of the extruder.

3. Device according to one of Claims 1 and 2, **characterized in that** the working ring (20) is mounted on a closure plug of the said hydraulic circuit which forms the downstream end (8) of the screw (1).

4. Device according to one of Claims 1 to 3, **characterized in that** the ring (30) is mounted inside the barrel (2).

5. Device according to one of the preceding claims, **characterized in that** the surface of the working ring (20, 30) that defines the said gap is smooth.

6. Device according to one of Claims 1 to 4, **characterized in that** the surface of the working ring (20, 30) that defines the said gap is crenulated.

7. Device according to Claim 6, **characterized in that** the working ring (20, 30) has crenulations (26) that are inclined rectilinear or in the form of a helix.

8. Device according to Claim 7, **characterized in that** the crenulations (26) that are inclined or in the form of a helix make an angle of less than 45° with the axial direction of the screw (1).

9. Device according to Claim 7, **characterized in that** the crenulations (26) that are inclined or in the form of a helix make an angle of between 45° and 80° with the axial direction of the screw (1).

10. Device according to one of the preceding claims, **characterized in that**, after the said working ring (20, 30) has been adjusted, the gap decreases down to a value of between 0.3 mm and 5 mm.

11. Device according to one of the preceding claims, **characterized in that** the working ring (20, 30) is of cylindrical overall shape with a diameter greater than its width.

12. Device according to one of the preceding claims, **characterized in that** the usable width of the working ring is less than or equal to the diameter of the extrusion screw.

13. Method for adjusting the gap of a device for extruding mixtures of elastomers comprising a rotary screw (1) with helical flights (3) which is arranged in a fixed barrel (2), the upstream end (7) of the screw being able to be coupled to rotational-drive means and the downstream end (8) thereof being able to propel a mixture towards an exit die, the screw having a tubular shape to allow a fluid from a hydraulic cooling circuit to flow, the outside diameter of the downstream end (8) of the screw (1) defining, with the inside diameter of the exit orifice (6) of the barrel (2), an annular gap for the passage of the mixture, and the device comprising a working ring (20, 30) mounted directly removably with the aid of quick-fit means near the said downstream end (8) so as to modify the annular gap by reducing its initial size according to the composition of the mixture used and to apply a shear stress to the mixture in the said gap, the said method being **characterized in that** the screw (1) comprises a duct (9) in which a coolant from the hydraulic cooling circuit flows, and which is closed, at the downstream end (8) of the said screw, by a plug (10), **in that** the quick-fit means allow the working ring (20, 30) to be fitted and removed without removing the hydraulic circuit closure plug, **in that** a set of interchangeable working rings (20, 30) is provided, and **in that** the quick-fit means are used for changing the working ring (20, 30) in order to adjust the annular gap according to the mixture of elastomers that is to be extruded.
